# EUROPÄISCHE PATENTSCHRIFT

(11) **EP 3 615 856 B1**
(45) Veröffentlichungstag und Bekanntmachung des Hinweises auf die Patenterteilung: **07.06.2023**
(21) Anmeldenummer: 18721740.1
(22) Anmeldetag: 27.04.2018
(51) Int. Cl.: F16L 25/10, F16L 47/24, F16L 51/00, F16L 37/04

(54) **ABDICHTKUPPLUNG ZWISCHEN WENIGSTENS ZWEI ANEINANDER LAGERBAREN ROHREN EINER ELEKTROLYSEANLAGE SOWIE VERWENDUNG**
SEALING COUPLING BETWEEN AT LEAST TWO PIPES OF AN ELECTROLYSIS SYSTEM THAT CAN BE MOUNTED ON ONE ANOTHER, AND USE THEREOF
RACCORD ÉTANCHE ENTRE AU MOINS DEUX TUBES À RACCORDER D'UNE INSTALLATION D'ÉLECTROLYSE, AINSI QUE SON UTILISATION

(30) Priorität: 28.04.2017 DE 102017207263
(43) Veröffentlichungstag der Anmeldung: 04.03.2020
(73) Patentinhaber: thyssenkrupp nucera AG & Co. KGaA, 44141 Dortmund (DE)
(72) Erfinder: KOLBE, Jörg, 44789 Bochum (DE); DONST, Dmitri, 50859 Köln (DE); AUSTENFELD, Sebastian, 59494 Soest (DE); TOROS, Peter, 45326 Essen (DE)
(74) Vertreter: thyssenkrupp Intellectual Property GmbH
(86) Internationale Anmeldenummer: PCT/EP2018/060869
(87) Internationale Veröffentlichungsnummer: WO 2018/197664

(56) Entgegenhaltungen:
- EP-A1- 0 237 904
- EP-A1- 1 630 322
- DE-A1- 19 859 882
- DE-C1- 3 136 018
- DE-T2- 69 521 314
- US-A- 3 807 776
- US-A- 4 600 222
- US-A- 4 753 462
- US-A- 5 511 831

## Beschreibung

Die Erfindung betrifft eine Abdichtkupplung zwischen wenigstens zwei aneinander lagerbaren Rohren einer Elektrolyseanlage, die mit einem gewissen axialen Spiel relativ zueinander aneinander gelagert werden sollen. Ferner betrifft die Erfindung die Verwendung einer Rohr-in-Rohr-Anordnung zum Bereitstellen einer solchen abdichtenden Vorrichtung. Insbesondere betrifft die Erfindung eine Abdichtkupplung gemäß dem Oberbegriff des Anspruchs 1.

Abdichtende Rohr-in-Rohr-Verbindungen werden insbesondere in Elektrolyseanlagen benötigt. Es gibt Elektrolyseanlagen zur Gewinnung von Chlor, Wasserstoff oder Natronlauge. Die jeweiligen Stoffe werden dabei innerhalb von Zellen der Elektrolyseanlagen gewonnen, und müssen für die weitere Verwendung aus den Zellen heraus gefördert werden. Üblicherweise werden dazu Sammelkanäle aus Metall eingesetzt, welche über Standrohre aus Kunststoffen eine Verbindung zur jeweiligen Zelle herstellen.

Bedingt durch enge Platzverhältnisse und Kostendruck muss die Verbindung zwischen Sammelkanälen und Standrohr zum einen eine schnelle und zuverlässige Montage und zum anderen auch eine dichte Verbindung über die gesamte Betriebszeit der Zelle ermöglichen. Hinderlich für eine gute Abdichtung können insbesondere die folgenden Faktoren sein: unterschiedliche Ausdehnungen bei Sammelkanal und Standrohr, insbesondere bei Temperaturen bis knapp 100 °C, größere Fertigungstoleranzen bei Kunststoff im Vergleich zu Metall. Dabei wird insbesondere auch nach einer universellen Verbindung bei unterschiedlichen Geometrien der Standrohre gestrebt.

Um möglichst vielen dieser Anforderungen gerecht werden zu können, wird z.B. ein konischer Stutzen am Sammelkanal vorgesehen, auf welchen das Standrohr geschoben werden kann. Aufgrund einer axialen Vorspannung kann eine gute Dichtigkeit bei einer einfachen Montage erzielt werden. Allerdings hat sich gezeigt, dass diese Art der Kupplung insbesondere bei Temperaturschwankungen Nachteile mit sich bringt. Bei erhöhten Temperaturen dehnt sich das Standrohr aus Kunststoff stärker aus als die metallischen Bauteile der Zelle, so dass sich die axiale Vorspannung erhöht. In manchen Fällen kann dann nicht vermieden werden, dass ab einer kritischen Vorspannung ein Verbiegen des Standrohres erfolgt. Dies bringt das Risiko mit sich, dass es zu unerwünschtem Kontakt zwischen Standrohr und Elektrode kommen, mit der Folge einer Unterversorgung der Elektrode mit Elektrolyten und/oder zu hohem Druck auf die Membrane der Anlage. Damit einher gehende Fehlfunktionen und verkürzte Lebensdauer sollten jedoch vermieden werden.

Aus DE 695 21 314 T2 ist eine überlappende Rohrverbindung mit einer über eine Klemme zusammenpressbaren Dichtverbindung bekannt.

US 4 753 462 A offenbart ein Rohrverbindungselement, das ebenfalls ein Klemmelement aufweist, welches über eine angezogene Schraube auf Vorspannung gebracht werden kann.

Aus US 3 807 776 A ist eine Kupplungseinheit zur Verbindung eines metallischen und aus Kunststoff hergestellten Rohres bekannt, bei dem eine mechanische Kraft ausübender Kragen und Adhäsionskräfte zur Abdichtung genutzt werden.

Aus US 4 600 222 A ist ferner eine Kupplungseinheit zur Verbindung eines metallischen und aus Kunststoff hergestellten Rohres bekannt, bei der ein Flansch zusammen mit einem rillenartigen Kragen in Eingriff gebracht wird, um die zur Abdichtung erforderliche mechanische Kraft bereitzustellen.

DE 31 36 018 C1 beschreibt eine Vorrichtung zum Befestigen eines Schlauches auf einem Rohrstutzen. Die Vorrichtung hat einen über den Schlauch schiebbaren Klemmring, der axiale zu seinem Aufschubende hin offene Schlitze aufweist. Die zwischen den Schlitzen liegenden Stege fassen einen Öffnungsrandabschnitt des Schlauches an dessen Aufschubende klemmend ein. Der Rohrstutzen weist eine radial vorstehende, umlaufende Halterippe auf.

Die Stege stützen sich mit den freien Enden ihrer radial inneren Abschnitte an der dem Aufschubende abgekehrten Seite der Halterippe entgegen der Abzugsrichtung ab, so dass die Rohrstutzen-Schlauch-Verbindung sehr hohen Axialkräften standhält.

Aufgabe der Erfindung ist es, eine Vorrichtung bereitzustellen, womit bei Rohren, die mit gewissem axialem Spiel relativ zueinander aneinander gelagert werden sollen, eine Abdichtung mit guter Betriebssicherheit sichergestellt werden kann. Insbesondere ist es Aufgabe, eine Kupplung bereitzustellen, welche auch hinsichtlich thermisch begründeter Relativbewegungen oder bei unterschiedlichen Materialien der Kupplungselemente eine zuverlässige Abdichtung sicherstellen kann, insbesondere mit hoher Betriebssicherheit über eine lange Lebensdauer.

Diese Aufgabe wird erfindungsgemäß gelöst durch eine Abdichtkupplung zwischen wenigstens zwei aneinander gelagerten/lagerbaren Rohren einer Elektrolyseanlage, insbesondere zwischen wenigstens einem mit einer Zelle der Elektrolyseanlage verbundenen Standrohr und wenigstens einem Sammelrohr, wobei die Abdichtkupplung an wenigstens einem Rohrpaar in einem Überlappungsbereich der Rohre durch aneinander anliegende Mantelflächen gebildet ist, wobei die Rohre des (jeweiligen) Rohrpaares relativ zueinander in axialer Richtung abdichtend ineinander losgelagert/loslagerbar sind, wobei an einem freien Ende des äußeren Rohres des (jeweiligen) Rohrpaares im Überlappungsbereich wenigstens eine Sollverformungsstelle an vordefinierter Umfangsposition mit vordefinierter axialer Länge ausgebildet ist, wobei eine Wandung oder die äußere Mantelfläche des inneren Rohres eine Konizität aufweist, an welcher eine Dichtfläche ausgebildet ist.. Dies liefert hohe Betriebssicherheit in einem breiten Temperaturbereich.

Dabei kann wenigstens eine Mantelfläche von der inneren Mantelfläche des äußeren Rohres und der äußeren Mantelfläche des inneren Rohres eine Dichtfläche definieren, welche Dichtfläche die Sollverformungsstelle in axialer Richtung überlappt, insbesondere in Richtung axial nach innen hinein ins Rohr. Die Dichtfläche kann dabei auch zu einem großen Anteil weiter innen bzw. weiter entfernt vom freien Ende des Rohres angeordnet sein als die Sollverformungsstelle. Beispielsweise erstreckt sich die Sollverformungsstelle über eine Länge z7, und die Dichtfläche erstreckt sich über eine Länge z11, z13, welche um den Faktor 1,5 bis 3 größer ist als die Länge z7.

Die Rohre, insbesondere ein Kunststoffrohr und ein metallisches Rohr, können sich basierend auf elastischen Kräften an einander anpassen. Die Dichtwirkung kann dabei, je nach Anwendung, auch erst im Betrieb-/Arbeitspunkt vollständig erreicht werden, insbesondere dann, wenn sich erst in einem bestimmten Betrieb-/Arbeitspunkt die finale Relativposition der Rohre zueinander einstellt. Vorspannkräfte sind also bei der Montage nicht notwendigerweise erforderlich. Vielmehr kann ein Zusammenstecken ohne definierte (Vorspann-)Kraft erfolgen. Dies ist einer der Vorteil der Abdichtkupplung. Die Montage kann auf sehr einfache Weise erfolgen, und das Abdichten kann durch die Inbetriebnahme der jeweiligen Anlage erfolgen, ohne dass weitere Eingriffe erforderlich sind. Insofern kann die Abdichtkupplung als sich im Betrieb selbstsichernde, selbstdichtende Kupplung beschrieben werden.

Es hat sich gezeigt, dass eine zufriedenstellende Dichtwirkung bereits ab einer Überlappung von ca. 3 mm erzielt werden kann, beispielsweise bei einem Innendurchmesser des äußeren Rohres im Bereich von 30 mm, also ca. 10 % Überlappung bezüglich des Betrages des Durchmessers.

Insbesondere kann mit dieser Abdichtkupplung eine zuverlässige und dichte Verbindung zwischen einem Sammelkanal (collecting channel) und einem Standrohr (discharge pipe) in einer Anlage zur NaCl-Elektrolyse sichergestellt werden, welche auch weitgehend unabhängig von thermischen Dehnungen, Standrohrlängen oder geometrischen Formen ist bzw. auf einfache Weise realisiert werden kann. Das eine Rohr, insbesondere Standrohr kann im unteren Teil einer Zelle einer Elektrolyseanlage an einem Flansch befestigt sein. Bei dieser Anordnung der Abdichtkupplung ergibt sich durch Wärmedehnung beim Betrieb der Zelle (ca. 90 °C) eine Relativbewegung zwischen Standrohr (insbesondere aus Kunststoffe) und Zelle (insbesondere aus Metall).

Die axiale Loslagerung ermöglicht dabei eine relative Verschiebung, z.B. bei Temperaturschwankungen aufgrund unterschiedlicher Wärmeausdehnungskoeffizienten. Dies ermöglicht, die Spannungen im jeweiligen Rohr zu minimieren, insbesondere axiale Spannungen und Biegespannungen. Dabei kann auch auf vergleichsweise unkomplizierte, robuste Weise eine zumindest annähernd gleichbleibende Dichtigkeit sichergestellt werden.

Das äußere Rohr (insbesondere aus PTFE) dehnt sich im Arbeitspunkt beispielsweise um ca. 10 mm in Längsrichtung. Die Abdichtkupplung ist eingerichtet zur Aufnahme einer derartigen Längenänderung, insbesondere einer Längenänderung im Bereich von 0,8 bis 1,2 % der Länge des Rohres.

Die Dichtwirkung braucht bei bestimmten Anwendungen nur in bestimmten Zuständen sichergestellt werden. Insbesondere kann dies durch Abstimmung der Sollverformungsstellen auf weitere Eigenschaften der Abdichtkupplung erfolgen, z.B. bezüglich einer Steigung einer Konizität eines der Rohre. Beim Erreichen des Arbeitspunktes stellt sich eine elastische Verformung des Kunststoffrohres ein, welches das innere Rohr dichtend umschließt. Der Überlappungsbereich, in welchem eine Verformung und Flächenpressung erfolgt, muss nicht immer konstant bleiben und kann so gewählt sein, dass die in der Produktion auftretenden Toleranzen ebenfalls mit ausgeglichen werden.

Bevorzugt ist die Dichtfläche umlaufend ausgebildet, abgesehen von der/den Sollverformungsstelle(n) am äußeren Rohr.

Gemäß einem Ausführungsbeispiel sind mehrere Sollverformungsstellen vorgesehen, die umlaufend angeordnet sind, insbesondere in gleichbleibendem Abstand in Umfangsrichtung. Hierdurch können Verformungskräfte und Relativbewegungen in Umfangsrichtung an unterschiedlichen Punkten aufgenommen werden.

Gemäß einem Ausführungsbeispiel ist wenigstens ein Paar gegenüber voneinander angeordneter Sollverformungsstellen vorgesehen, insbesondere diametral. Dies liefert eine symmetrische Anordnung, mit vergleichsweise homogener Kraftverteilung, und damit auch eine symmetrische Belastung des entsprechenden Rohres, und damit auch nur wenig Risiko bezüglich Verbiegen oder Knicken. Wahlweise können auch zwei oder drei diametrale Paare vorgesehen sein. Dies kann das Verformungsverhalten verbessern. Insbesondere kann sichergestellt werden, dass eine in Reaktion auf axiale Vorspannungen erforderliche Lageänderung symmetrisch über den Umfang verteilt erfolgt. Dadurch sinkt das Risiko eines Knickens oder Verbiegens noch weiter.

Gemäß einem Ausführungsbeispiel ist die (jeweilige) Sollverformungsstelle in axialer Richtung parallel zur/zu einer Mittenlängsachse des Rohres ausgebildet. Hierdurch können vorteilhafte Kräfteverhältnisse realisiert werden, und die Dichtfunktion kann auch über einen vergleichsweise großen Bereich axialer Relativbewegungen sichergestellt werden.

Die jeweilige Sollverformungsstelle kann als Kompensationsschlitz ausgebildet sein. Das Einbringen der Kompensationsschlitze kann an dem dichtenden Ende des Standrohres erfolgen. Der Kompensationsschlitz ist so gestaltet, dass sich das Standrohr, bei einer vorhandenen Längendehnung als auch hinsichtlich Fertigungsabweichungen, an die konische Geometrie des inneren Rohres, insbesondere metallischen Rohres angleicht.

Gemäß einem Ausführungsbeispiel umfasst die (jeweilige) Sollverformungsstelle einen Kompensationsbereich, insbesondere eine abgerundete Aussparung an einem unteren, inneren Ende der Sollverformungsstelle. Dies kann Spannungsspitzen vermindern oder vermeiden, insbesondere in einem Bereich hoher lokaler Beanspruchungen am jeweiligen Rohr. Dies kann insbesondere plastische Verformungen bei besonders großen Relativbewegungen verhindern.

Der Kompensationsbereich kann in Abhängigkeit vom Durchmesser des Rohres dimensioniert sein. Insbesondere kann eine Kompensationsbohrung am Ende eines Schlitzes gemäß einem Verhältnis Bohrungsdurchmesser zu Rohrdurchmesser im Bereich von 0,03 bis 0,1, insbesondere 0,05 dimensioniert sein (entsprechend 5 %).

Die Tiefe der Sollverformungsstelle (insbesondere in Ausgestaltung als Schlitz) kann im Bereich von z.B. 5 bis 10 mm liegen, insbesondere 7 mm betragen. Für dieses Beispiel kann der Kompensationsbereich z.B. durch eine 1,5 mm-Bohrung oder eine entsprechend runde Aussparung (Radius) am unteren Ende des Schlitzes gebildet sein.

Gemäß einem Ausführungsbeispiel ist die Sollverformungsstelle eingerichtet für eine konische Aufweitung des freien Endes. Dies liefert hohe Axialtoleranz und kann Biege- und Vorspannkräfte vermindern.

Erfindungsgemäß weist eine Wandung oder die äußere Mantelfläche des inneren Rohres eine Konizität auf, an welcher die Dichtfläche ausgebildet ist, insbesondere an einem freien Ende des Rohres, insbesondere über einen Längenabschnitt von mindestens 20 mm oder mindestens 50 % des Durchmessers des äußeren Rohres. Hierdurch kann auch eine Entspannung bzw. ein Entlasten der Kupplung auf vorteilhafte Weise erfolgen.

Die Konizität liegt beispielsweise im Bereich von 10 bis 20°. Die Neigung der Mantelfläche gegenüber der Mittenlängsachse liegt beispielsweise im Bereich von 5 bis 10°. Die Konizität erstreckt sich beispielsweise über einen Bereich von 35 bis 45 mm.

Das innere Rohr weist z.B. einen maximalen Durchmesser im Bereich von 30 bis 50 mm auf. Ein freies Ende des inneren Rohr weist z.B. einen Durchmesser im Bereich von 25 bis 35 mm auf.

Gemäß einem Ausführungsbeispiel weist die durch eine/die Konizität einer Wandung oder der (äußeren) Mantelfläche des inneren Rohres definierte Dichtfläche eine Steigung im Bereich von 10 bis 20° auf, insbesondere mindestens 12° und maximal 18°. Diese vergleichsweise moderate Steigung liefert vergleichbare Reaktionskräfte weitgehend unabhängig von der jeweiligen axialen Relativposition.

Beispielsweise kann die Konizität durch einen Winkel im Bereich von ca. 15° gebildet sein, insbesondere 15° +/- 2,5°. Es hat sich gezeigt, dass bei dieser Ausgestaltung der Konizität eine gute Dichtwirkung in Verbindung mit einer nicht zu hohen Beanspruchung der Sollverformungsstelle(n) sichergestellt werden kann.

Gemäß einem Ausführungsbeispiel weist das innere Rohr ein freies Ende auf, an welchem einer oder mehrere Zapfen oder Laschen oder Vorsprünge ausgebildet sind, welche geometrisch von der Dichtfläche abgegrenzt sind. Hierdurch kann auf einfache Weise eine Einführungshilfe für den Kupplungsvorgang bereitgestellt werden, und es kann dabei auch eine klare funktionale Trennung zwischen für die Montage vorgesehenen Rohrabschnitten und für die Abdichtung vorgesehenen Rohrabschnitten erfolgen.

Beispielsweise sind zwei Laschen vorgesehen, welche in axialer Richtung ca. 10 bis 20 mm hervorstehen, wobei eine Konizität der Mantelfläche bevorzugt auch an den Laschen ausgebildet ist.

Gemäß einem Ausführungsbeispiel definieren sowohl die innere Mantelfläche des äußeren Rohres als auch die äußere Mantelfläche des inneren Rohres eine/die Dichtfläche, welche die Sollverformungsstelle axial in Richtung nach innen überlappen, so dass eine Abdichtung weiter innen als die Sollverformungsstelle sichergestellt ist. Hierdurch kann die Dichtwirkung unabhängig von einem Belastungszustand der Sollverformungsstelle sichergestellt werden. Dies ist insbesondere dann vorteilhaft, wenn die Sollverformungsstelle schlitzartig ausgebildet ist.

Gemäß einem Ausführungsbeispiel definiert die innere Mantelfläche des äußeren Rohres eine/die Dichtfläche, welche weiter innen als die Sollverformungsstelle angeordnet ist, wobei die äußere Mantelfläche des inneren Rohres eine/die Dichtfläche definiert, welche sich bis zu einem freien Ende des inneren Rohres erstreckt. Die Abdichtung kann dabei weit nach innen verlegt werden, also dorthin, wo mit vergleichsweise großer Konstanz und unabhängig vom Grade der axialen Überlappung eine abdichtende Kontaktierung sichergestellt werden kann.

Die jeweilige Oberfläche weist, abgesehen von Sollverformungsstellen, bevorzugt überhaupt keine Unterbrechungen oder Unregelmäßigkeiten auf. Bevorzugt sind die Oberflächen bzw. Dichtflächen rotationssymmetrisch vollständig umlaufend ausgebildet.

Gemäß einem Ausführungsbeispiel weist die Sollverformungsstelle eine axiale Länge auf, die im Bereich von 10 bis 30 % des Durchmessers des äußeren Rohres liegt, insbesondere 15 bis 25 %. Hierdurch kann ein guter Kompromiss zwischen axialer Bewegungstoleranz und Eigenstabilität bzw. erzielbarer Flächenpressung sichergestellt werden.

Die Tiefe der Sollverformungsstelle, insbesondere in Form eines Schlitzes, beträgt am tiefsten Punkt z.B. 7 mm. Dort kann eine Kompensationsbohrung/- rundung, z.B. mit 1,5 mm Durchmesser vorgesehen sein. Bei der Abstimmung der Größenverhältnisse können auch noch weitere Faktoren berücksichtigt werden, wie z.B. der Winkel einer Konizität. Eine Feinabstimmung kann je nach Materialpaarung und Einsatzfall (insbesondere Temperaturschwankungen) und Länge und Durchmesser der Rohre erfolgen. Es hat sich gezeigt, dass die hier genannten Größenverhältnisse auch bei einer Skalierung einen guten abdichtenden Effekt sicherstellen können.

Gemäß einem Ausführungsbeispiel ist die Sollverformungsstelle in Umfangsrichtung größer bzw. breiter als 0,3 mm oder größer als 1 % des Durchmessers des äußeren Rohres. Dies ermöglicht eine ausreichende Verformung auch bei vergleichsweise unelastischen Werkstoffen.

Gemäß einem Ausführungsbeispiel ist die Sollverformungsstelle in Umfangsrichtung kleiner bzw. schmaler als 1 mm oder kleiner als 5 % des Durchmessers des äußeren Rohres. Hierdurch kann einerseits viel Material bzw. Fläche konserviert werden, andererseits kann ein Verkanten vermieden werden oder auch eine gute Zugänglichkeit zu einem Kompensationsbereich oder möglichst spannungsarmes Anordnen und Einbringen des Kompensationsbereiches ermöglicht werden.

Gemäß einem Ausführungsbeispiel ist die Sollverformungsstelle (im endmontierten Zustand oder im Betriebszustand) in axialer Richtung vom inneren Rohr um wenigstens 5 % des Durchmessers des äußeren Rohres oder wenigstens 3 mm überlappt, insbesondere um wenigstens 10 %. Hierdurch kann auch bei vergleichsweise starken Relativbewegungen eine ausreichende Abdichtung in einem Bereich axial neben der Sollverformungsstelle erfolgen.

Gemäß einem Ausführungsbeispiel überlappt die Dichtfläche die Sollverformungsstelle in axialer Richtung um wenigstens 3 mm oder wenigstens 5 % des Durchmessers des äußeren Rohres nach innen, insbesondere um wenigstens 10 %. Dies liefert eine gute Dichtwirkung, weitgehend unabhängig von der Art der Relativbewegung in der Sollverformungsstelle.

Gemäß einem Ausführungsbeispiel ist die jeweilige Sollverformungsstelle als Kompensationsschlitz mit einem Loch als Kompensationsbereich ausgebildet. Hierdurch kann der Sollverformungsstelle ein einfacher, robuster Aufbau verliehen werden. Das Verformungsverhalten kann auch vergleichsweise einfache Art und Weise vordefiniert werden.

Gemäß einem Ausführungsbeispiel ist die Abdichtkupplung durch eine kraftschlüssige axialtolerante Rohr-in-Rohr-Anordnung eingerichtet zum Abdichten bei Kraftschluss durch elastische Verformung gebildet. Hierdurch ergeben sich zuvor genannte Vorteile.

Gemäß einem Ausführungsbeispiel besteht ein Rohr des Rohrpaars oder zumindest dessen freies Ende aus Metall und das andere Rohr des Rohrpaars oder zumindest dessen freies Ende besteht aus Kunststoff, insbesondere aus PTFE. Insbesondere kann das äußere Rohr komplett aus Kunststoff ausgeführt werden, ohne dass ein Risiko eines plastischen Umbiegens bzw. Abknickens besteht.

Gemäß einem Ausführungsbeispiel ist die Abdichtkupplung eingerichtet für axiale Relativbewegungen der Rohre eines Rohrpaares relativ zueinander im Bereich von 5 bis 15 mm oder 20 bis 40 % des Durchmessers des inneren Rohres, insbesondere 10 mm oder 30 % des Durchmessers des inneren Rohres. Dies liefert eine hohe Betriebssicherheit auch bei vergleichsweise starken axialen Relativbewegungen bzw. in einem breiten Temperaturbereich.

Die zuvor genannte Aufgabe wird erfindungsgemäß auch gelöst durch eine Abdichtkupplung zwischen wenigstens zwei aneinander gelagerten Rohren einer Elektrolyseanlage, insbesondere durch eine zuvor beschriebene Abdichtkupplung, hergestellt durch Kuppeln von zwei Rohren an deren freien Enden an aneinander anliegenden Mantelflächen und durch Loslagern der Rohre relativ zueinander mittels der Kupplung, wobei die Abdichtung im Überlappungsbereich der Rohre erfolgt, und wobei im Überlappungsbereich wenigstens eine Sollverformungsstelle an wenigstens einer vordefinierten Umfangsposition mit vordefinierter axialer Länge angeordnet wird, mittels welcher Sollverformungsstelle abdichtendes aneinander Anliegen der Mantelflächen bei zumindest annähernd gleichbleibender axialer Vorspannkraft auf den Überlappungsbereich auch bei axialer Verlagerung der Rohre relativ zueinander sichergestellt wird. Dies liefert zuvor genannte Vorteile.

Gemäß einem Ausführungsbeispiel ist die Abdichtkupplung eingerichtet bzw. ausgebildet als selbstsichernde, axial losgelagerte Wärmedehnkupplung, insbesondere mit einem Wärmedehnkoeffizienten des äußeren Rohres größer als ein Wärmedehnkoeffizient des inneren Rohres. Dies liefert zuvor genannte Vorteile. Dabei kann das äußere Rohr aus einem Material weicher als das Material des inneren Rohres bestehen. Eine Verformung erfolgt dann vornehmlich oder ausschließlich im äußeren Rohr. Dabei können die Sollverformungsstellen besonders effektiv wirken.

Die zuvor genannte Aufgabe wird erfindungsgemäß gelöst durch Verwendung einer Rohr-in-Rohr-Anordnung als abdichtende Kupplung zwischen wenigstens einem Rohr aus Metall und wenigstens einem Rohr aus Kunststoff in einer Elektrolyseanlage, insbesondere eines innen überlappenden Sammelrohres aus Metall und eines außen überlappenden Standrohres aus Kunststoff, wobei das äußere Rohr aus Kunststoff mit schlitzförmigen Sollverformungsstellen an einer konischen Dichtfläche des inneren Rohres aus Metall in einem Überlappungsbereich axial losgelagert und durch Flächenpressung abgedichtet wird. Dies liefert zuvor beschrieben Vorteile.

Weitere Merkmale und Vorteile der Erfindung ergeben sich aus der Beschreibung wenigstens eines Ausführungsbeispiels anhand von Zeichnungen, sowie aus den Zeichnungen selbst. Bei Bezugszeichen, die nicht explizit in Bezug auf eine einzelne Figur beschrieben werden, wird auf die anderen Figuren verwiesen. Dabei zeigen jeweils in schematischer Darstellung
- Fig. 1A, 1B: jeweils in einer Seitenansicht eine vorbekannte, konische Rohr-in-Rohr-Anordnung gemäß dem Stand der Technik,
- Fig. 2A, 2B, 2C, 2D: jeweils in einer Seitenansicht eine Abdichtkupplung gemäß einem Ausführungsbeispiel, und
- Fig. 3A, 3B: in einer Seitenansicht und in einer Schnittansicht gemäß der strichpunktierten Schnittlinie einen Teil einer Elektrolyseanlage mit einer Zelle mit einer darin verbauten Abdichtkupplung gemäß einem Ausführungsbeispiel.

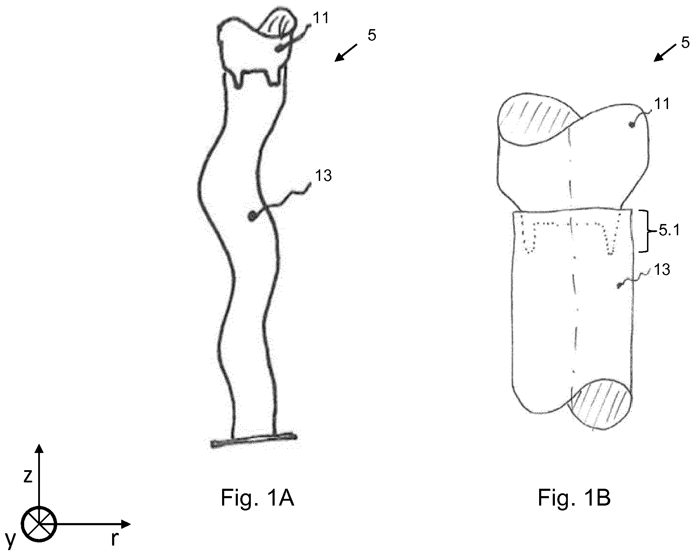

Die Fig. 1A, 1B zeigen eine Rohr-in-Rohr-Anordnung 5 mit einem inneren Rohr 11 und einem äußeren Rohr 13, welche sich in einem Überlappungsbereich 5.1 einander überlappen. Dabei erfolgt eine Abdichtung an einer jeweiligen konischen Mantelfläche der Rohre, an welcher jeweils eine (innere) Dichtfläche und eine (äußere) Dichtfläche gebildet ist. Mit zunehmender Überlappung wird die Dichtfläche größer, insbesondere proportional. Aufgrund der Konizität des inneren Rohres 11 steigen die Spannungen in den Rohren dabei stark an, möglicherweise auch überproportional. Ungünstig bzw. nachteilig kann hierbei auch sein, dass an der Schnittstelle unten am freien Ende des inneren Rohres die Dichtigkeit immer schlechter wird, je größer die Überlappung wird. Die Abdichtstelle wird von der eigentlichen Schnittstelle zwischen innerem und äußerem Rohr weg verlagert. Dies kann technisch nachteilige Effekte haben, insbesondere dann, wenn das äußere Rohr mit der Zeit an Elastizität verliert. Auch hat sich gezeigt, dass bei Anordnungen, in welchen die Rohre relativ zueinander verkanten oder sich zumindest in einem kleinen Winkelbereich relativ zueinander ausrichten, eine Abdichtung nicht mit guter Sicherheit sichergestellt werden kann. Dabei können auch hohe Biegespannungen hervorgerufen werden, was die Betriebssicherheit senkt.

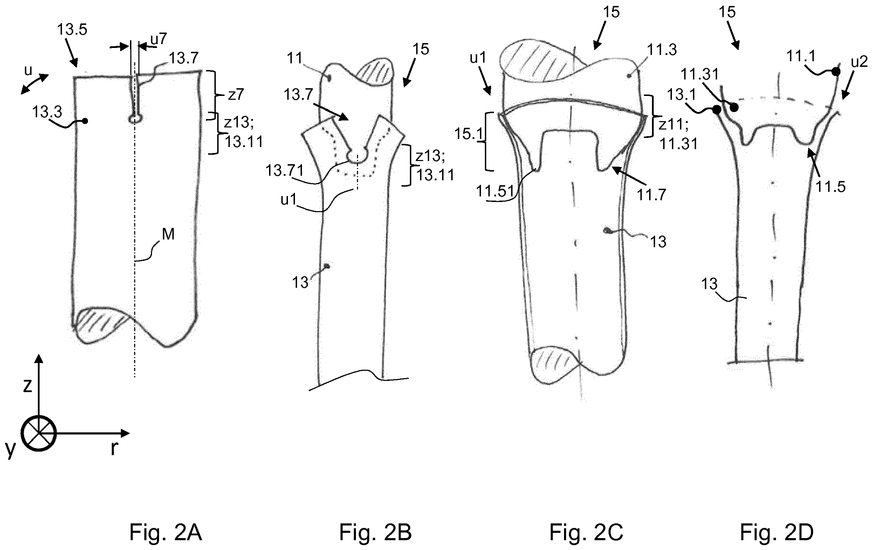

Die Fig. 2A, 2B, 2C, 2D zeigen eine Abdichtkupplung 10 mit einer sich entlang einer Mittenlängsachse M erstreckenden Rohr-in-Rohr-Anordnung 15 mit einem inneren (ersten) Rohr 11, insbesondere einem Sammelrohr in einer Zelle einer Elektrolyseanlage, und einem äußeren (zweiten) Rohr 13, insbesondere Standrohr, welche Rohre zusammen die Rohr-in-Rohr-Anordnung 15 mit einem Überlappungsbereich 15.1 bilden.

An beiden Rohren 11, 13 ist eine Dichtfläche 11.31, 13.11 ausgebildet, jeweils mit der axialen Erstreckung z11, z13. Das innere Rohr 11 ist an einem freien Ende 11.5 konisch ausgebildet. Die Konizität 11.7 erstreckt sich dabei auch bis hin zu Laschen 11.51 am freien Ende. Die Abdichtung erfolgt an einer äußeren Mantelfläche 11.3 des inneren Rohres 11 und an einer inneren Mantelfläche 13.1 des äußeren Rohres 13. An einer äußeren Mantelfläche 13.3 des äußeren Rohres 13 und an einer inneren Mantelfläche 11.1 des inneren Rohres 11 erfolgt kein Kontakt.

Am äußeren Rohr 13 sind zwei sich in axialer z-Richtung erstreckende Sollverformungsstellen 13.7 ausgebildet, jeweils an einer Umfangsposition u1, u2, insbesondere diametral gegenüberliegend, also in Umfangrichtung u um 180° versetzt. In Umfangsrichtung u weist die jeweilige Sollverformungsstelle 13.7 eine einheitliche Breite u7 auf, abgesehen von einem abgerundeten, insbesondere kreisrunden Kompensationsbereich 13.71, welcher an einem Fuß bzw. Boden der Sollverformungsstelle 13.7 ausgebildet ist.

Die Sollverformungsstelle 13.7 überlappt die Dichtfläche 13.11 in axialer Richtung. Die Dichtfläche 13.11 erstreckt sich in axialer Richtung weiter als die Sollverformungsstelle 13.7. Die Sollverformungsstelle 13.7 ist schlitzartig in axialer Richtung an einem freien Ende des Rohres 13 ausgebildet. Die axiale Erstreckung bzw. Länge z7 der Sollverformungsstelle 13.7 liegt im Bereich von 10 bis 30 % des Durchmessers des äußeren Rohres.

Bei dieser Abdichtkupplung 10 ist bei axialer Relativbewegung der Rohre 11, 13 eine elastische Verformung im Bereich der Sollverformungsstelle 13.7 möglich. Durch die Vorspannung des äußeren Rohres 13 kann eine für die Dichtwirkung vorteilhafte Flächenpressung an den aneinander anliegenden Abschnitten der Mantelflächen sichergestellt werden.

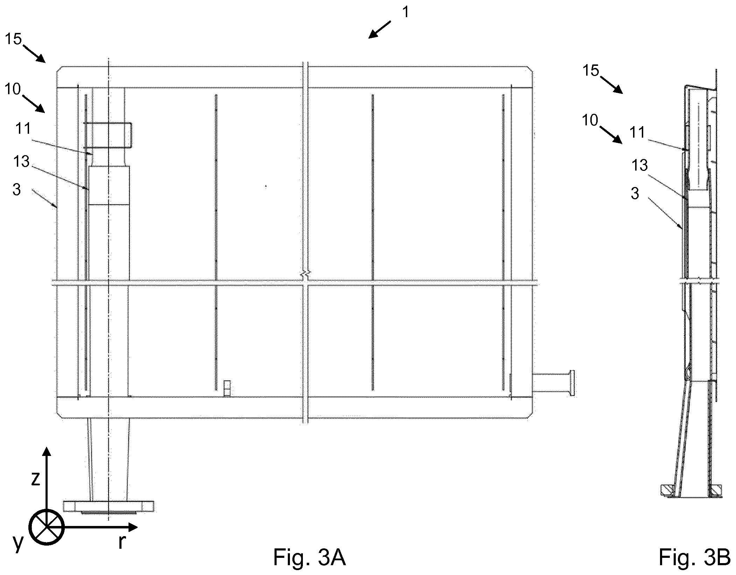

Die Fig. 3A, 3B zeigen schematisch eine Elektrolyseanlage 1 mit einer Zelle oder mehreren Zellen 3, in welcher jeweils wenigstens eine Abdichtkupplung 10 vorgesehen sein kann. Bei dieser Anwendung der Abdichtkupplung 10 kann das äußere Standrohr 13 insbesondere aus Kunststoff ausgebildet sein, und das innere Sammelrohr 11 ein vergleichsweise kurzer Rohrstutzen insbesondere aus Metall sein. Thermisch begründete Lageänderungen erfolgen dann erfahrungsgemäß vor allem im Standrohr 13.

Zur Funktionsweise der Elektrolyseanlage 1 lässt sich noch Folgendes anmerken: Die Zelle 3 besteht aus zwei Hälften, von denen in Fig. 3B nur eine Hälfte dargestellt ist. Die beiden Hälften werden aufeinander gelegt und dichtend miteinander verschraubt. Ein Auslaufstutzen bzw. ein Auslass aus der Zelle befindet sich unten (Fig. 3B) bzw. links unten (Fig. 3A). In den Auslaufstutzen wird das so genannte Standrohr 13 eingesetzt und an dessen oberen Ende mit dem metallischen Sammelrohr bzw. Stutzen 11 verbunden bzw. verkuppelt. Im Betrieb läuft die Zelle 3 voll mit Flüssigkeit, bis oben hin. Der Stutzen 11 übernimmt dann die Funktion eines Überlaufes, in der Art eines aus der Zelle oder Elektrolyseanlage abführenden Rohres, und die Flüssigkeit kann über das Standrohr 13 in den Auslass gelangen. Somit ist es wichtig, dass an dieser Kupplung zwischen Stutzen 11 und Standrohr 13 Dichtheit sichergestellt werden kann, auch bei vergleichsweise großen Lageänderungen bzw. Spannungsschwankungen.

### Bezugszeichenliste:

- 1: Elektrolyseanlage
- 3: Zelle
- 5: Rohr-in-Rohr-Anordnung
- 5.1: Überlappungsbereich
- 10: Abdichtkupplung
- 11: inneres (erstes) Rohr, insbesondere Sammelrohr
- 11.1: innere Mantelfläche
- 11.3: äußere Mantelfläche
- 11.31: Dichtfläche
- 11.5: freies Ende
- 11.51: Lasche
- 11.7: Konizität
- 13: äußeres (zweites) Rohr, insbesondere Standrohr
- 13.1: innere Mantelfläche
- 13.11: Dichtfläche
- 13.3: äußere Mantelfläche
- 13.5: freies Ende
- 13.7: Sollverformungsstelle
- 13.71: Kompensationsbereich
- 15: Rohr-in-Rohr-Anordnung
- 15.1: Überlappungsbereich
- M: Mittenlängsachse
- u1, u2: Umfangsposition
- u7: Erstreckung der Sollverformungsstelle in Umfangsrichtung
- z7: axiale Erstreckung der Sollverformungsstelle
- z11: axiale Erstreckung der (inneren) Dichtfläche
- z13: axiale Erstreckung der (äußeren) Dichtfläche
- r, y: radiale Richtung
- u: Umfangsrichtung
- z: axiale Richtung

## Patentansprüche

1. Abdichtkupplung (10) zwischen wenigstens zwei aneinander lagerbaren Rohren einer Elektrolyseanlage, insbesondere zwischen wenigstens einem mit einer Zelle der Elektrolyseanlage verbundenen Standrohr und wenigstens einem Sammelrohr, wobei die Abdichtkupplung an wenigstens einem Rohrpaar (11, 13) in einem Überlappungsbereich (5.1, 15.1) der Rohre durch aneinander anliegende Mantelflächen (11.3, 13.1) gebildet ist,
**dadurch gekennzeichnet, dass** die Rohre des Rohrpaares relativ zueinander in axialer Richtung abdichtend ineinander losgelagert sind, wobei die axiale Loslagerung eine relative Verschiebung der Rohre bei Temperaturschwankungen aufgrund unterschiedlicher Wärmeausdehnungskoeffizienten ermöglicht, wobei an einem freien Ende (13.5) des äußeren Rohres des Rohrpaares im Überlappungsbereich (15.1) wenigstens eine Sollverformungsstelle (13.7) an vordefinierter Umfangsposition (u1, u2) mit vordefinierter axialer Länge ausgebildet ist, wobei eine Wandung oder die äußere Mantelfläche (11.3) des inneren Rohres eine Konizität aufweist, an welcher eine Dichtfläche (11.31) ausgebildet ist.

2. Abdichtkupplung nach Anspruch 1, wobei mehrere Sollverformungsstellen (13.7) vorgesehen sind, die umlaufend angeordnet sind, insbesondere in gleichbleibendem Abstand in Umfangsrichtung, oder wobei wenigstens ein Paar gegenüber voneinander angeordneter Sollverformungsstellen (13.7) vorgesehen ist.

3. Abdichtkupplung nach einem der vorhergehenden Ansprüche, wobei wenigstens eine Mantelfläche von der inneren Mantelfläche (13.1) des äußeren Rohres und der äußeren Mantelfläche (11.3) des inneren Rohres eine Dichtfläche (11.31, 13.11) definiert, welche Dichtfläche die Sollverformungsstelle in axialer Richtung überlappt, und/oder wobei sowohl die innere Mantelfläche (13.1) des äußeren Rohres als auch die äußere Mantelfläche (11.3) des inneren Rohres eine Dichtfläche definieren, welche die Sollverformungsstelle axial in Richtung nach innen überlappen (11.31, 13.11), und/oder wobei die innere Mantelfläche (13.1) des äußeren Rohres eine Dichtfläche definiert, welche weiter innen als die Sollverformungsstelle (13.7) angeordnet ist, und wobei die äußere Mantelfläche (11.3) des inneren Rohres eine Dichtfläche definiert, welche sich bis zu einem freien Ende (11.5) des inneren Rohres erstreckt.

4. Abdichtkupplung nach einem der vorhergehenden Ansprüche, wobei die Sollverformungsstelle (13.7) einen Kompensationsbereich (13.71) umfasst, insbesondere eine abgerundete Aussparung an einem unteren, inneren Ende der Sollverformungsstelle, und/oder wobei die Sollverformungsstelle eingerichtet ist für eine konische Aufweitung des freien Endes (13.5).

5. Abdichtkupplung nach einem der vorhergehenden Ansprüche, wobei die Dichtfläche an einem freien Ende (11.5) des Rohres ausgebildet ist, insbesondere über einen Längenabschnitt von mindestens 20 mm oder mindestens 50 % des Durchmessers des äußeren Rohres, und/oder wobei die durch die Konizität einer Wandung oder der Mantelfläche des inneren Rohres (11) definierte Dichtfläche eine Steigung im Bereich von 10 bis 20° aufweist, insbesondere mindestens 12° und maximal 18°.

6. Abdichtkupplung nach einem der vorhergehenden Ansprüche, wobei die Sollverformungsstelle (13.7) eine axiale Länge aufweist, die im Bereich von 10 bis 30 % des Durchmessers des äußeren Rohres liegt, insbesondere 15 bis 25 %.

7. Abdichtkupplung nach einem der vorhergehenden Ansprüche, wobei die Sollverformungsstelle (13.7) in Umfangsrichtung größer ist als 0,3 mm oder größer als 1 % des Durchmessers des äußeren Rohres (13), und/oder wobei die Sollverformungsstelle (13.7) in Umfangsrichtung kleiner ist als 1 mm oder kleiner als 5 % des Durchmessers des äußeren Rohres (13).

8. Abdichtkupplung nach einem der vorhergehenden Ansprüche, wobei die Sollverformungsstelle (13.7) in axialer Richtung vom inneren Rohr (11) um wenigstens 5 % des Durchmessers des äußeren Rohres (13) oder wenigstens 3 mm überlappt ist, insbesondere um wenigstens 10 %, und/oder wobei die Dichtfläche die Sollverformungsstelle (13.7) in axialer Richtung um wenigstens 3 mm oder wenigstens 5 % des Durchmessers des äußeren Rohres nach innen überlappt, insbesondere um wenigstens 10 %.

9. Abdichtkupplung nach einem der vorhergehenden Ansprüche, wobei die Sollverformungsstelle (13.7) als Kompensationsschlitz mit einem Loch als Kompensationsbereich (13.71) ausgebildet ist.

10. Abdichtkupplung nach einem der vorhergehenden Ansprüche, wobei die Abdichtkupplung durch eine kraftschlüssige axialtolerante Rohr-in-Rohr-Anordnung (15) eingerichtet zum Abdichten bei Kraftschluss durch elastische Verformung gebildet ist.

11. Abdichtkupplung nach einem der vorhergehenden Ansprüche, wobei ein Rohr des Rohrpaars (11, 13) oder zumindest dessen freies Ende aus Metall besteht und wobei das andere Rohr des Rohrpaars oder zumindest dessen freies Ende aus Kunststoff besteht, insbesondere PTFE.

12. Abdichtkupplung nach einem der vorhergehenden Ansprüche, wobei die Abdichtkupplung eingerichtet ist für axiale Relativbewegungen der Rohre eines Rohrpaares relativ zueinander im Bereich von 5 bis 15 mm oder 20 bis 40 % des Durchmessers des inneren Rohres, insbesondere 10 mm oder 30 % des Durchmessers des inneren Rohres.

13. Abdichtkupplung nach einem der vorhergehenden Ansprüche, ausgebildet als selbstsichernde, axial losgelagerte wärmedehnungstolerante Kupplung, insbesondere mit einem Wärmedehnkoeffizienten des äußeren Rohres größer als ein Wärmedehnkoeffizient des inneren Rohres und/oder mit dem äußeren Rohr aus einem Material weicher als das Material des inneren Rohres.

14. Verwendung einer Rohr-in-Rohr-Anordnung (15) als wärmedehnungstolerante, abdichtende Kupplung zwischen wenigstens einem Rohr (11) aus Metall und wenigstens einem Rohr (13) aus Kunststoff in einer Elektrolyseanlage, insbesondere eines innen überlappenden Sammelrohres aus Metall und eines außen überlappenden Standrohres aus Kunststoff, wobei das äußere Rohr (11) aus Kunststoff mit schlitzförmigen Sollverformungsstellen (13.7) an einer konischen Dichtfläche (11.31) des inneren Rohres (11) aus Metall in einem Überlappungsbereich (15.1) axial losgelagert und durch Flächenpressung abgedichtet wird, wobei die axiale Loslagerung eine relative Verschiebung der Rohre bei Temperaturschwankungen aufgrund unterschiedlicher Wärmeausdehnungskoeffizienten ermöglicht.

## Claims

1. A sealed coupling (10) between at least two pipes mountable on one another of an electrolysis facility, in particular between at least one discharge pipe connected to a cell of the electrolysis facility and at least one collecting pipe, wherein the sealed coupling is formed on at least one pipe pair (11, 13) in an overlap region (5.1, 15.1) of the pipes by lateral surfaces (11.3, 13.1) abutting one another,
**characterized in that** the pipes of the pipe pair are mounted one inside the other in a floating manner to form a seal relative to one another in the axial direction, wherein the axial floating mounting enables a relative displacement of the pipes in case of temperature variations because of different coefficients of thermal expansion, wherein at least one intended deformation point (13.7) is formed at predefined circumferential position (u1, u2) having predefined axial length on a free end (13.5) of the outer pipe of the pipe pair in the overlap region (15.1), wherein a wall or an outer lateral surface (11.3) of the inner pipe has a conicity on which a sealing surface (11.31) is formed.

2. The sealed coupling as claimed in claim 1, wherein multiple intended deformation points (13.7) are provided, which are arranged circumferentially, in particular at uniform spacing in the circumferential direction, or wherein at least one pair of intended deformation points (13.7) arranged opposite to one another is provided.

3. The sealed coupling as claimed in either one of the preceding claims, wherein at least one lateral surface of the inner lateral surface (13.1) of the outer pipe and the outer lateral surface (11.3) of the inner pipe defines a sealing surface (11.31, 13.11), which sealing surface overlaps the intended deformation point in the axial direction, and/or wherein both the inner lateral surface (13.1) of the outer pipe and also the outer lateral surface (11.3) of the inner pipe define a sealing surface, which overlaps (11.31, 13.11) the intended deformation point axially in the direction inward, and/or wherein the inner lateral surface (13.1) of the outer pipe defines a sealing surface which is arranged farther inward than the intended deformation point (13.7), and wherein the outer lateral surface (11.3) of the inner pipe defines a sealing surface which extends up to a free end (11.5) of the inner pipe.

4. The sealed coupling as claimed in any one of the preceding claims, wherein the intended deformation point (13.7) comprises a compensation region (13.71), in particular a rounded recess at a lower, inner end of the intended deformation point, and/or wherein the intended deformation point is configured for a conical widening of the free end (13.5).

5. The sealed coupling as claimed in any one of the preceding claims, wherein the sealing surface is formed at a free end (11.5) of the pipe, in particular over a length section of at least 20 mm or at least 50% of the diameter of the outer pipe, and/or wherein the sealing surface defined by the conicity of a wall or the lateral surface of the inner pipe (11) has a slope in the range of 10 to 20°, in particular at least 12° and at most 18°.

6. The sealed coupling as claimed in any one of the preceding claims, wherein the intended deformation point (13.7) has an axial length which is in the range of 10 to 30% of the diameter of the outer pipe, in particular 15 to 25%.

7. The sealed coupling as claimed in any one of the preceding claims, wherein the intended deformation point (13.7), in the circumferential direction, is larger than 0.3 mm or greater than 1% of the diameter of the outer pipe (13), and/or wherein the intended deformation point (13.7), in the circumferential direction, is smaller than 1 mm or less than 5% of the diameter of the outer pipe (13).

8. The sealed coupling as claimed in any one of the preceding claims, wherein the intended deformation point (13.7) is overlapped in the axial direction by the inner pipe (11) by at least 5% of the diameter of the outer pipe (13) or at least 3 mm, in particular by at least 10%, and/or wherein the sealing surface overlaps the intended deformation point (13.7) inward in the axial direction by at least 3 mm or at least 5% of the diameter of the outer pipe, in particular by at least 10%.

9. The sealed coupling as claimed in any one of the preceding claims, wherein the intended deformation point (13.7) is formed as a compensation slot having a hole as the compensation region (13.71).

10. The sealed coupling as claimed in any one of the preceding claims, wherein the sealed coupling is formed by a friction-locked, axially-tolerant pipe-in-pipe arrangement (15) configured to seal upon friction lock by elastic deformation.

11. The sealed coupling as claimed in any one of the preceding claims, wherein one pipe of the pipe pair (11, 13) or at least its free end consists of metal and wherein the other pipe of the pipe pair or at least its free end consists of plastic, in particular PTFE.

12. The sealed coupling as claimed in any one of the preceding claims, wherein the sealed coupling is configured for axial relative movements of the pipes of a pipe pair in relation to one another in the range of 5 to 15 mm or 20 to 40% of the diameter of the inner pipe, in particular 10 mm or 30% of the diameter of the inner pipe.

13. The sealed coupling as claimed in any one of the preceding claims, formed as a self-locking coupling, which is mounted in a floating manner axially and is tolerant of thermal expansion, in particular having a coefficient of thermal expansion of the outer pipe greater than a coefficient of thermal expansion of the inner pipe and/or having the outer pipe made of a material which is softer than the material of the inner pipe.

14. The use of a pipe-in-pipe arrangement (15) as a sealed coupling tolerant of thermal expansion between at least one pipe (11) made of metal and at least one pipe (13) made of plastic in an electrolysis facility, in particular an interior overlapping collecting pipe made of metal and an exterior overlapping discharge pipe made of plastic, wherein the outer pipe (11) made of plastic having slotted intended deformation points (13.7) is axially mounted in a floating manner on a conical sealing surface (11.31) of the inner pipe (11) made of metal in an overlap region (15.1) and is sealed by surface pressure, wherein the axial floating mounting enables a relative displacement of the pipes in case of temperature variations because of different coefficients of thermal expansion.

## Revendications

1. Raccord d'étanchéité (10) entre au moins deux tubes d'une installation d'électrolyse pouvant être montés l'un contre l'autre, notamment entre au moins un tube vertical relié à une cellule de l'installation d'électrolyse et au moins un tube collecteur, le raccord d'étanchéité étant formé sur au moins une paire de tubes (11, 13) dans une zone de chevauchement (5.1, 15.1) des tubes par des surfaces d'enveloppe (11.3, 13.1) venant en contact l'une avec l'autre,
**caractérisé en ce que** les tubes de la paire de tubes sont montés à palier libre l'un dans l'autre de manière étanche dans la direction axiale l'un par rapport à l'autre, le montage à palier libre axial permettant un déplacement relatif des tubes en cas de variations de température en raison de coefficients de dilatation thermique différents, à une extrémité libre (13.5) du tube extérieur de la paire de tubes dans la zone de chevauchement (15.1) étant réalisé au moins un point destiné à la déformation (13.7) à une position circonférentielle (u1, u2) prédéfinie avec une longueur axiale prédéfinie, une paroi ou la surface d'enveloppe extérieure (11.3) du tube intérieur présentant une conicité sur laquelle est réalisée une surface d'étanchéité (11.31).

2. Raccord d'étanchéité selon la revendication 1, dans lequel plusieurs points destinés à la déformation (13.7) sont prévus, qui sont agencés sur la circonférence, notamment à une distance constante dans la direction circonférentielle, ou dans lequel au moins une paire de points destinés à la déformation (13.7) agencés l'un en face de l'autre est prévue.

3. Raccord d'étanchéité selon l'une quelconque des revendications précédentes, dans lequel au moins une surface d'enveloppe parmi la surface d'enveloppe intérieure (13.1) du tube extérieur et de la surface d'enveloppe extérieure (11.3) du tube intérieur définit une surface d'étanchéité (11.31, 13.11), laquelle surface d'étanchéité chevauche le point destiné à la déformation dans la direction axiale, et/ou dans lequel aussi bien la surface d'enveloppe intérieure (13.1) du tube extérieur que la surface d'enveloppe extérieure (11.3) du tube intérieur définissent une surface d'étanchéité, qui chevauche axialement en direction de l'intérieur (11.31, 13.11) le point destiné à la déformation, et/ou dans lequel la surface d'enveloppe intérieure (13.1) du tube extérieur définit une surface d'étanchéité qui est agencée plus à l'intérieur que le point destiné à la déformation (13.7), et dans lequel la surface d'enveloppe extérieure (11.3) du tube intérieur définit une surface d'étanchéité qui s'étend jusqu'à une extrémité libre (11.5) du tube intérieur.

4. Raccord d'étanchéité selon l'une quelconque des revendications précédentes, dans lequel le point destiné à la déformation (13.7) comprend une zone de compensation (13.71), notamment un évidement arrondi à une extrémité intérieure inférieure du point destiné à la déformation, et/ou dans lequel le point destiné à la déformation est adapté à un élargissement conique de l'extrémité libre (13.5).

5. Raccord d'étanchéité selon l'une quelconque des revendications précédentes, dans lequel la surface d'étanchéité est réalisée à une extrémité libre (11.5) du tube, notamment sur une section de longueur d'au moins 20 mm ou d'au moins 50 % du diamètre du tube extérieur, et/ou dans lequel la surface d'étanchéité définie par la conicité d'une paroi ou de la surface d'enveloppe du tube intérieur (11) présente une pente dans la plage de 10 à 20°, notamment d'au moins 12° et d'au maximum 18°.

6. Raccord d'étanchéité selon l'une quelconque des revendications précédentes, dans lequel le point destiné à la déformation (13.7) présente une longueur axiale qui se situe dans la plage de 10 à 30 % du diamètre du tube extérieur, notamment de 15 à 25 %.

7. Raccord d'étanchéité selon l'une quelconque des revendications précédentes, dans lequel le point destiné à la déformation (13.7) est supérieur dans la direction circonférentielle à 0,3 mm ou supérieur à 1 % du diamètre du tube extérieur (13), et/ou dans lequel le point destiné à la déformation (13.7) est inférieur dans la direction circonférentielle à 1 mm ou inférieur à 5 % du diamètre du tube extérieur (13).

8. Raccord d'étanchéité selon l'une quelconque des revendications précédentes, dans lequel le point destiné à la déformation (13.7) est chevauché dans la direction axiale par le tube intérieur (11) d'au moins 5 % du diamètre du tube extérieur (13) ou d'au moins 3 mm, notamment d'au moins 10 %, et/ou dans lequel la surface d'étanchéité chevauche le point destiné à la déformation (13.7) dans la direction axiale vers l'intérieur d'au moins 3 mm ou d'au moins 5 % du diamètre du tube extérieur, notamment d'au moins 10 %.

9. Raccord d'étanchéité selon l'une quelconque des revendications précédentes, dans lequel le point destiné à la déformation (13.7) est réalisé sous forme de fente de compensation avec un trou en tant que zone de compensation (13.71).

10. Raccord d'étanchéité selon l'une quelconque des revendications précédentes, dans lequel le raccord d'étanchéité est formé par un agencement de tube dans le tube (15) à tolérance axiale, à liaison de force, adapté pour assurer l'étanchéité en cas de liaison de force par déformation élastique.

11. Raccord d'étanchéité selon l'une quelconque des revendications précédentes, dans lequel un tube de la paire de tubes (11, 13) ou au moins son extrémité libre est constitué de métal et dans lequel l'autre tube de la paire de tubes ou au moins son extrémité libre est constitué de matière plastique, notamment de PTFE.

12. Raccord d'étanchéité selon l'une quelconque des revendications précédentes, dans lequel le raccord d'étanchéité est adapté pour des mouvements relatifs axiaux des tubes d'une paire de tubes l'un par rapport à l'autre dans la plage de 5 à 15 mm ou de 20 à 40 % du diamètre du tube intérieur, notamment de 10 mm ou de 30 % du diamètre du tube intérieur.

13. Raccord d'étanchéité selon l'une quelconque des revendications précédentes, réalisé sous forme de raccord autobloquant, monté à palier libre axialement, tolérant la dilatation thermique, notamment avec un coefficient de dilatation thermique du tube extérieur supérieur à un coefficient de dilatation thermique du tube intérieur et/ou avec le tube extérieur en un matériau plus souple que le matériau du tube intérieur.

14. Utilisation d'un agencement de tube dans le tube (15) en tant que raccord d'étanchéité tolérant la dilatation thermique entre au moins un tube (11) en métal et au moins un tube (13) en matière plastique dans une installation d'électrolyse, notamment d'un tube collecteur en métal chevauchant à l'intérieur et d'un tube vertical en matière plastique chevauchant à l'extérieur, le tube extérieur (11) en matière plastique étant monté à palier libre axialement avec des points destinés à la déformation en forme de fentes (13.7) sur une surface d'étanchéité conique (11.31) du tube intérieur (11) en métal dans une zone de chevauchement (15.1) et étant étanchéifié par pression de la surface, le montage à palier libre axial permettant un déplacement relatif des tubes en cas de variations de température en raison de coefficients de dilatation thermique différents.
